(19) Europäisches Patentamt
European Patent Office
Office européen des brevets

(11) **EP 4 372 622 A1**

(12) **EUROPEAN PATENT APPLICATION**

(43) Date of publication:
**22.05.2024 Bulletin 2024/21**

(21) Application number: **22207380.1**

(22) Date of filing: **15.11.2022**

(51) International Patent Classification (IPC):
**G06N 3/09** (2023.01)       **G06N 10/60** (2022.01)
**G06N 10/40** (2022.01)      **G06N 20/20** (2019.01)
**G06N 3/045** (2023.01)

(52) Cooperative Patent Classification (CPC):
**G06N 10/60; G06N 3/045; G06N 3/09; G06N 20/20;**
G06N 3/048; G06N 10/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Terra Quantum AG**
**9000 St. Gallen (CH)**

(72) Inventors:
• **Kordzanganeh, Mohammad**
**9000 St. Gallen (CH)**
• **Kosichkina, Daria**
**9000 St. Gallen (CH)**
• **Melnikov, Alexey**
**9000 St. Gallen (CH)**

(74) Representative: **Kretschmann, Dennis**
**Boehmert & Boehmert**
**Anwaltspartnerschaft mbB**
**Pettenkoferstrasse 22**
**80336 München (DE)**

(54) **METHOD FOR TRAINING A HYBRID CLASSICAL-QUANTUM APPROXIMATION SYSTEM**

(57)    A method for training a hybrid quantum-classical computation system for approximating a labeling function for an input feature vector, the system comprising a variational quantum circuit, a machine learning model, and a labeling module configured to receive a first output generated by the variational quantum circuit and a second output generated by the machine learning model and to generate an output label, wherein the method comprises an iterative process comprising the steps of providing an input feature vector of the sample dataset to the variational quantum circuit and to the machine learning model, providing the first output and the second output to the labeling module, and determining a parameter update of the variational parameters, the machine-learning parameters, and the trainable combination parameters based on a value of a cost function for the output label for the input feature vector.

Fig. 2

EP 4 372 622 A1

**Description**

FIELD OF THE INVENTION

The present invention is in the field of quantum computing. More precisely, the present invention relates to a hybrid quantum-classical computation system as part of a trainable approximator.

BACKGROUND

Quantum computers provide a platform of controllable quantum mechanical systems whose state and interaction can be controlled in order to perform a computation. The computation is realized by a deterministic evolution of the controllable quantum mechanical systems, e.g. qubits as quantum analogues of classical bits, and the state of the quantum mechanical systems can be measured to determine the outcome of the computation.

Control operations on these qubits are termed Quantum gates. Quantum gates can coherently act on qubits for inducing changes of the state of a single qubit (so called single-qubit gates) and for acting on multiple qubits (so called multi-qubit gates), e.g. to entangle the states of the multiple qubits, and any combination thereof. For example, a single-qubit gate may induce a rotation of the spin state of an electron by a selectable value, e.g. $\pi/2$. A multi-qubit gate may coherently act on two or more qubits, such as a coherent CNOT operation on the state of two qubits. A plurality of quantum gates can be applied to the qubits of the quantum computer in parallel or in sequence for performing a computation. Finally, the state of the qubits may be measured repeatedly after applying a sequence of quantum gates to determine the probabilities for each possible outcome of the computation.

In order to compute solutions to problems which are considered intractable on classical computers, a quantum computer can leverage the special properties of quantum mechanical states, in particular the superposition and entanglement of different quantum states, to find solutions with a comparatively low number of calculation steps.

However, the superposition/entangled states of quantum mechanical systems are inherently volatile (e.g. suffer from decoherence) and the control and measurement of these systems is subject to fidelity margins, such that state-of-the-art quantum computers are currently limited both in the number of controllable quantum mechanical systems (qubits) as well as the number of successively performed control actions (quantum gates).

Despite these shortcomings, promising applications for near term available quantum processors exist, i.e. noisy intermediate-scale quantum (NISQ) devices, such as variational quantum algorithms. In variational quantum algorithms, the action of the quantum gates is parametrized in terms of variational parameters, and the variational parameters may be systematically varied with the help of a classical computing resource, in a manner analogous to machine learning. By varying the variational parameters to extremize a cost function, which attributes a cost to the output of the variational quantum circuit with respect to an optimal solution, an output of the variational quantum circuit can be "trained" to provide an optimal solution to an unseen problem. Entanglement between different qubits may give access to a large internal state space to provide "quantum advantage".

For example, Caro et al. ("Generalization in quantum machine learning from few training data*")* study quantum machine learning (QML) methods involving variationally optimizing a parameterized quantum circuit on a training data set, and for subsequently making predictions on a testing data set (i.e., generalizing). The generalization performance in QML is studied after training on a limited number N of training data points, and general theoretical bounds on the generalization error in variational QML are provided, which guarantee that a good performance on a sufficiently large training data set implies, with high probability, a good performance on previously unseen data points.

SUMMARY OF THE INVENTION

However, quantum devices are still not widely available and may be limited both in the number of qubits as well as in circuit depth in practical implementations, which also limits the application of NISQ devices as part of variational quantum circuits.

In view of this state-of-the-art, the object of the invention is to provide an improved classifier including quantum circuit based architectures, e.g. quantum neural networks, which can efficiently employ relatively small, realizable quantum devices for approximation tasks.

This object is solved by a method for training a hybrid quantum-classical approximation system, a corresponding device, and a computer program according to the independent claims. The dependent claims relate to preferred embodiments.

According to a first aspect, the invention relates to a method for training a hybrid quantum-classical computation system for approximating a labeling function for an input feature vector . The system comprises a variational quantum circuit, a machine learning model, and a labeling module. The variational quantum circuit comprises a plurality of quantum gates acting on qubits of a qubit register, the plurality of quantum gates comprising variational quantum gates, wherein parametrized actions of the variational quantum gates on the qubits of the qubit register is parametrized according to associated variational parameters, and at least one encoding gate for modifying a state of the qubits of the qubit register according to the input feature vector. The machine learning model is implemented on a classical processing system and is configured to process the input feature vector according to a parametrized transfer function, wherein the parametrized transfer function is parametrized by machine-learning parameters. The labeling module is implemented on a classical processing system and is configured to receive a first output generated by the variational quantum circuit and a second output generated by the machine learning model and to generate an output label based on a combination of the first output and the second output, wherein the combination is based on a plurality of trainable combination parameters. The method comprises an iterative process comprising the steps of providing an input feature vector of the sample dataset to the variational quantum circuit and to the machine learning model, providing the first output and the second output to the labeling module, and determining a parameter update of the variational parameters, the machine-learning parameters, and the trainable combination parameters based on a value of a cost function for the output label for the input feature vector.

In the hybrid quantum-classical computation system, the variational quantum circuit and the machine learning model can process the input feature vector in parallel, and the respective outputs of the variational quantum circuit and the machine learning model can be combined to obtain an approximation for the label. The combination may be a linear combination of the first output and the second output, such that an output feature may be based to some extent on the first output and the second output according to a ratio defined by the respective combination parameters.

A fully-connected network with a single intermediate neural layer defining a machine learning model can approximate any function by fitting a superposition of rectangular waves (Michael A. Nielsen. "Neural networks and deep learning"). Conversely, Schuld et al. ("Effect of data encoding on the expressive power of variational quantum-machine-learning models") showed that variational quantum circuits can be universal approximators by fiting a truncated Fourier series over the samples. The inventors found that for problems with a mix of periodic and anharmonic/high-frequency features, a combination of a variational quantum circuit and a machine learning model processing the data in parallel can efficiently approximate the harmonic and anharmonic features, respectively. In particular, such a combined device may harness the capability of a variational quantum circuit implemented in a NISQ device for generalizing harmonic components of an unknown function from a limited number of samples, while anharmonic components can be efficiently fitted using the machine learning model.

In principle, any labeling function may be approximated using the hybrid quantum-classical computation system, but the system is preferably applied to a labeling function which comprises a mix of harmonic and anharmonic (high-frequency) components. The input feature vector may be a single value, but will generally comprise a plurality of values for which a corresponding output label is to be approximated using the variational quantum circuit and the machine learning model.

A variational quantum circuit may generally comprise a plurality of qubits, whose quantum states may be manipulated by the application of quantum gates applied in sequence or in parallel to single qubits and/or multiple qubits.

The qubits can be initialized into an initial state, such as the ground state of each qubit. In some embodiments, after initialization of the qubits into their ground states, superposition states of each qubit in the qubit register are prepared, e.g. via the application of Hadamard gates.

Subsequently, a plurality of quantum gates may be applied to the qubits to transform their state towards an output state. In variational quantum circuits, the action of at least some of the quantum gates in the variational quantum network is parametrized, such that the measured output is a function of variational parameters parametrizing variable actions of the (variational) quantum gates. The combined action of the (at least partially parametrized) quantum gates may be termed a variational quantum network, as the operating principle may be similar to the operation of a neural network.

Further, in the variational quantum circuit, at least one quantum gate is used as an encoding gate, wherein the action of the encoding gate is based on the input feature vector. For example, a value of the input feature vector may be encoded into the qubit by rotating the state of one qubit proportional to the value of the input feature vector through a single qubit rotation.

Two- or multi-qubit gates may create superposition states between the qubits, such as to harness the "quantum advantage" provided by the quantum hardware. For example, when the variational quantum circuit is implemented in a quantum device based on a trapped ion system, the states of different ions in the trapped ion system may be coupled through a joint excitation, e.g. mediated via the Molmer-Sorensen interaction. As another example, pairs of qubits in the qubit register may be entangled via a (tunable) nearest neighbor interaction or exchange of a quantum particle, in order to implement a two-qubit gate, such as a CNOT gate.

In some embodiments, the variational quantum network may be defined in terms of layers of quantum gates, which may act on the qubits to link the qubits in the qubit register.

A layer of quantum gates may comprise a cumulative action of a plurality of coherent operations on the state of the qubits in the qubit register. The cumulative action of the coherent operations in one layer should generally act on all qubits of the qubit register which are involved in the computation, or in other words, a layer of quantum gates should directly affect the state of all qubits in the qubit register. Each layer should comprise at least one multi-qubit gate and at least one variational quantum gate (which in principle could be the same gates).

The variational quantum circuit may generally be comprised of a series of trainable layers comprising single- and 2-qubit quantum gates (Pauli rotation gates (RX,RY,RZ), Hadamard, CNOT, and the identity operator (I) may suffice for constructing a suitable quantum circuit, but other quantum gates may equally be employed), interlaced with encoding gates, e.g. made up of Pauli rotation gates.

The skilled person will appreciate that a plurality of the quantum gates in a layer may be applied in parallel to the qubits to shorten the sequence of coherent operations on the state of the qubits in a layer. The subsequent application of a plurality of layers of quantum gates to the qubits may then form the variational quantum network, with the variational quantum network being parametrized by variational parameters for each layer.

The layers may contain the same types of quantum gates and may be applied sequentially to the qubit register. For example, each layer may feature the same architecture of quantum gates while different elements of the variational parameters may apply to the variational gates of the layer. In other words, the layers may feature the same quantum gate architecture, but the action of the quantum gates on the qubits in each layer may differ based on the variational parameters.

After the layers of quantum gates have acted on the qubits, the qubits can be measured to obtain a characteristic outcome of the variational quantum circuit with respect to the known initial state. The outcome of the quantum mechanical computation may be linked to the classical solutions of the problem via the computational basis states of the qubits. The computational basis states may be orthogonal basis states of the Hilbert space spanned by the tensor product of the basis states of each qubit.

Initial variational parameters for the variational quantum gates can encode an initial (random) guess, and the outcome of the evaluation of the variational quantum circuit with the variational parameters can be measured (repeatedly) to determine a corresponding label. Based on the label, a cost function may be classically evaluated to attribute a cost to the label, or in other words, a measure is calculated of how good the label is.

By training the system, the variational parameters may be systematically varied in an iterative manner, such that the variational quantum circuit approximates at least a part of the output label.

The machine learning model may derive the second output based on the processing of the input feature vector by a transfer function based on trainable machine learning parameters. For example, the machine learning model may comprise a plurality of artificial neurons which may be arranged in terms of an input layer, at least one hidden layer, and an output layer, wherein the artificial neurons can be implemented in a classical processing system and can provide a trainable parametrized transfer function or a portion thereof. The artificial neurons may receive one or more features at their input and may return a corresponding output feature according to an activation function. For example, input features may be multiplied internally with weighting factors and summed with biases, and the result of the internal weighting and biasing may be fed to a non-linear activation function, e.g. a sigmoid, logistic or a ReLU type function, to return an output feature based on at least one input feature vector.

As an example, the machine learning model maybe a multilayer perceptron (MLP). The values of the input feature vector may be received at an input layer of the machine learning model and passed to each artificial neuron of a hidden layer, as part of a fully connected layer. The output features of the hidden layer may subsequently be passed to an output layer, which may comprise a plurality of artificial neurons mimicking the structure of the output label. For example, if the label is a single number in a pre-determined interval, the output layer may comprise a single artificial neuron, which may be connected to all artificial neurons of the preceding hidden layer.

Trainable parameters of the machine learning model, such as the variable weighting factors and/or biases of the artificial neuronal network may form the machine-learning parameters, which may determine the output of the machine learning model with respect to a given input feature vector according to the parametrized transfer function.

The labeling module receives the first output and the second output generated by the variational quantum circuit and the machine learning model, respectively, and can derive an output label based on both the first output and the second output. The labeling module may in principle be a machine learning model, e.g. multilayer perceptron, and/or may form part of the machine learning model used for determining the second output, e.g. as part of a second half of layers of artificial neurons, which receive the first output from the variational quantum circuit and a second output from a first half of layers of artificial neurons processing the input feature vector.

In some examples, the output label is a linear combination of the first output and the second output based on the combination parameters, which may determine a respective contribution of the features of the first output and the second output to the output label.

The system can be trained in an iterative manner, wherein the variational parameters, the machine learning parameters, and the combination parameters, in the following also jointly referred to as trainable parameters, may be jointly optimized in each step of the iterative process, such that the output label approaches the label of the sample dataset for the same input feature vector.

The iterative process may mimick the training of classical machine learning models, wherein the output label is associated with a cost value based on the cost function. For example, the training may be based on a sample dataset of labels and corresponding sample input feature vectors, and the cost function may be a loss function based on the output label and based on the sample label of the sample dataset for the same input feature vector. The cost function may be a mean squared error between the output label and the sample label for the same input feature vector. The skilled person will appreciate that the sample data set may be constructed as the hybrid quantum-classical computation system is trained, e.g. by obtaining a data point of the sample dataset, e.g. including input features and a corresponding label, and subsequently training the hybrid quantum-classical computation system based on the data point.

In other examples, the optimal label may be unknown, but a cost may be attributed to a candidate solution based on a problem statement, e.g. a travel time for the traveling salesman problem as an illustrative example, and the trainable parameters may be varied, such that the cost is extremized (maximized or minimized).

The trainable parameters may be updated with known techniques employed in classical machine learning, such as gradient based optimization algorithms, e.g. stochastic gradient descent or adaptive moment estimation, or gradient free optimization, such as simulated annealing. Preferably, the optimization algorithm is gradient based, and the method may comprise determining a gradient of the trainable parameters with respect to the cost attributed to the output label by the cost function.

In preferred embodiments, determining the parameter update comprises determining a vector of derivatives for the variational parameters as part of a parameter update gradient.

The trainable parameters may be updated based on the parameter update gradient, wherein a subset or all of the trainable parameters may be modified based on a value of the gradient and a value for a learning rate quantifying a size of an update step.

In preferred embodiments, determining the parameter update is based on a gradient of the cost function and a learning rate, in particular based on stochastic gradient descent and/or in particular including a momentum coefficient based on a previously determined gradient of the cost function.

The gradient of the cost function for the variational parameters may be accessible through the parameter shift rule, in which the variational quantum circuit is evaluated with shifted variational parameters in order to determine partial derivatives of the cost function with respect to the shifted variational parameters.

In preferred embodiments, determining the vector of derivatives for the variational parameters comprises applying the parameter shift rule to a subset of or all of the variational gates at each iteration of the iterative process.

Specifically, for quantum gates with eigenvalues $\pm\frac{1}{2}$, e.g. one-qubit rotation generators in $\frac{1}{2}\{\sigma_x, \sigma_y, \sigma_z\}$, the partial derivative of a function $f$ with respect to a variational parameter $\theta_j$ may be determined according to $\partial_{\theta_j}f = r\,(f(\theta_j + \pi/2) - f(\theta_j - \pi/2))$.

The partial derivatives of the cost function with respect to the machine learning parameters may be determined with known methods. Hence, the different parts of the hybrid quantum-classical computation system may be jointly optimized based on a gradient composed of the partial derivatives of the cost function with respect to the trainable parameters of both the variational quantum circuit and the machine learning model. For example, the quantum mechanical network can be evaluated repeatedly to determine the partial derivatives of the layers of quantum gates with respect to the variational parameters, and the gradient may be classically computed from the measured partial derivatives as well as classically computed derivatives of the machine learning parameters.

However, the skilled person will appreciate that the variational parameters can equally be optimized in an optimization algorithm without access to the derivatives, e.g. by (randomly) sampling the cost function, such as in the Constrained Optimization By Linear Approximation (COBYLA) algorithm or similar algorithms, and the gradient may be an estimated gradient based on an estimate of the energy landscape of the cost function.

The cost function may then be minimized/maximized by iteratively updating the trainable parameters according to the determined/estimated gradient of the cost function with respect to the trainable parameters, e.g. with an adaptive moment based update function.

In preferred embodiments, determining the parameter update is based on an update function of a moving average over a gradient of the cost function and of a moving average over the squared gradient of the cost function.

As the adaptive moment based update function depends on the moving average over the gradient of the cost function and the (element) square of the moving average over the gradient of the cost function, the update of the variational parameters may be smoothed by first order and second order moments of the gradient, enabling the descent towards an optimized solution also for a "noisy" quantum system.

In preferred embodiments, a learning rate for updating the variational parameters and the machine-learning parameters is different.

The inventors found that the optimal performance of the hybrid quantum-classical computation system may require a tuning of a relative speed at which the variational parameters and the machine learning parameters are updated during the training, such that the training converges towards a set of trainable parameters in which both the variational quantum circuit and the machine learning model contribute optimally to the output label. For example, the variational quantum circuit and the machine learning model may converge towards an individual optimal solution at different rates. If the learning rates are not tuned correctly, during training, the system may get stuck in a local minimum, in which one of the variational quantum circuit and the machine learning model contributes less to the output label than in an optimally configured hybrid quantum-classical computation system.

In some embodiments, the learning rate of the variational parameters is larger than the learning rate of the machine learning parameters, e.g. to promote a fitting of harmonic components with the variational quantum circuit.

In preferred embodiments, the method determines an update vector for the variational parameters, the machine-learning parameters, and the trainable combination parameters, and wherein determining the parameter update comprises multiplying the update vector with a learning rate vector, comprising different learning rate factors for the variational parameters and the machine-learning parameters.

The update vector may be based on the gradient, and the respective entries for the machine-learning parameters and the variational parameters of the learning rate vector may be different, such as to compensate for a difference of an intrinsic learning rate of the variational quantum circuit and the machine learning model and/or to introduce a bias for fitting the harmonic components first using the variational quantum circuit.

In preferred embodiments, the update vector is a gradient of the variational parameters, the machine-learning parameters, and the trainable combination parameters with respect to the cost function.

Alternatively, the learning rates may correspond to different decay rates for a gradient-less optimization algorithm, e.g. an annealing algorithm.

The different learning rates may be estimated based on individual rates of convergence for the machine learning model and the variational parameters, may be based on historical optimization results, or may be determined empirically for the hybrid quantum-classical computation system, e.g. for a sample dataset of input feature vectors and corresponding labels.

In preferred embodiments, the method comprises training the hybrid quantum-classical computation system with different ratios of the learning rate for updating the variational parameters and the machine-learning parameters to determine an optimal ratio of learning rates for updating the variational parameters and the machine-learning parameters with respect to the labeling function.

For example, the hybrid quantum-classical computation system may be initialized at a fixed initialization point, including the same, e.g. randomly determined, starting values for the trainable parameters each time, and the training may be repeated from the fixed initialization point with different values of the learning rates for the machine learning model and the variational quantum circuit while recording the final results for the cost function for input feature vectors not used during training (e.g. not part of the training dataset). In practice, one learning rate may be fixed, e.g. the learning rate associated with the variational parameters, and the other learning rate(s) may be varied, e.g. the learning rate of the machine learning parameters and the combination parameters, which may be the same or different learning rates in some embodiments.

Based on the resulting values of the cost function, optimal learning rates may be selected, and the hybrid quantum-classical computation system may subsequently be implemented or further trained based on the previously determined optimal learning rates or their ratio.

The variational quantum circuit may fit a Fourier series to the labeling function, such that the variational quantum circuit may be trained to approximate a period portion of the labelling function. In some embodiments, the input feature vector is scaled according to an encoding factor prior to an encoding in the variational quantum circuit.

In preferred embodiments, the method comprises multiplying the input feature vector with an encoding factor vector to obtain a scaled input feature vector and encoding the input feature vector with the at least one encoding gate based on the scaled input feature vector in the variational quantum circuit, wherein the encoding factor vector is in particular a trainable vector, which is updated as part of the iterative process.

For example, the encoding feature vector may be a vector of scaling factors which are trained as part of the method, and which may rescale the input feature vector or portions thereof in accordance with a periodicity of the labelling function.

In preferred embodiments, the at least one encoding gate comprises single qubit rotations proportional to a value of the input feature vector.

The encoding gate may encode the value as a rotation angle, e.g. as a Pauli rotation gate (such as RX, RY, RZ), which may capture a periodicity of the labelling function if the input feature vector is appropriately scaled.

In preferred embodiments, the at least one encoding gate is applied a number of k times as part of the variational quantum circuit, wherein k is an integer value greater than 2, and wherein the variational quantum circuit is parametrized by at least $2k$ variational parameters.

Applying the encoding gate multiple times may implement a re-uploading of the input feature vector into the variational quantum circuit, such that the variational quantum circuit may fit a higher order Fourier series to the labelling function. Specifically, by encoding the input feature k times, the variational quantum circuit maybe suitable for fitting a Fourier series of kth order to the labelling function. In principle, to fit K + 1 complex Fourier coefficients, at least $M \geq 2K$

+ 1 degrees of freedom (variational parameters) maybe required. Thus, $2k$ (or $2k$-1) variational parameters in the variational quantum circuit may allow fitting a Fourier series of kth order.

The encoding gate may be applied to a plurality of qubits in parallel to implement a plurality of applications, or may be applied to the same or different qubits in series, e.g. as part of an encoding operation in a layer of the variational quantum circuit.

According to a second aspect, the invention relates to a hybrid quantum-classical computation system for approximating a labeling function for an input feature vector based on a sample dataset of labels and corresponding input feature vectors. The system comprises a variational quantum circuit, a machine learning model, and a labeling module. The variational quantum circuit comprises a plurality of quantum gates acting on qubits of a qubit register, the plurality of quantum gates comprising variational quantum gates, wherein parametrized actions of the variational quantum gates on the qubits of the qubit register is parametrized according to an associated variational parameters, and at least one encoding gate for modifying a state of the qubits of the qubit register according to the input feature vector. The machine learning model is configured to process the input feature vector according to a parametrized transfer function, wherein the parametrized transfer function is parametrized by machine-learning parameters. The labeling module is configured to receive a first output generated by the variational quantum circuit and a second output generated by the machine learning model and to generate an output label based on a combination of the first output and the second output according to combination parameters. The variational parameters, the machine-learning parameters, and the combination parameters are obtained based on a common training algorithm, wherein the variational parameter, the machine-learning parameters, and the combination parameters are jointly updated in an iterative manner to extremize a cost function of the output label.

The hybrid quantum-classical computation system may be obtained by training the system using the method according to the first aspect. The trainable parameters may be obtained by training the system with different learning rates for the variational parameters and the machine learning parameters.

In preferred embodiments, the combination parameters determine a ratio of a relative contribution of the first output and the second output to the output label, wherein the ratio is greater than 0.01.

The ratio may be defined as a ratio of at least one element of the second output and of a corresponding element of the first output, e.g. when the first and second outputs are linearly combined.

In preferred embodiments, the at least one encoding gate is applied a number of k times as part of the variational quantum circuit, wherein k is an integer value greater than 2, and wherein the variational quantum circuit is parametrized by at least $2k$ variational parameters.

In preferred embodiments, the system comprises a classical processing system and/or AI processing hardware configured to implement the trained machine learning model, wherein the AI processing hardware in particular comprises a GPU, a neural processing unit, analog memory based hardware, or neuromorphic hardware.

The processing system may comprise a single processing unit or may comprise a plurality of processing units, which may be functionally connected. The processing units may comprise a microcontroller, an ASIC, a PLA (CPLA), an FPGA, or other processing device, including processing devices operating based on software, hardware, firmware, or a combination thereof, such as the afore-mentioned AI processing hardware. The processing devices can include an integrated memory, or communicate with an external memory, or both, and may further comprise interfaces for connecting to sensors, devices, appliances, integrated logic circuits, other controllers, or the like, wherein the interfaces may be configured to receive or send signals, such as electrical signals, optical signals, wireless signals, acoustic signals, or the like.

According to a third aspect, the invention relates to a computer program comprising machine readable instructions, which when the computer program is executed by a processing system cause the processing system to implement a method according to any embodiment of the first or second aspects and/or to implement a system according to any embodiment of the third aspect.

The computer program may be stored on a non-transitory medium as machine readable instructions, which, when the computer program is executed by a processing system, cause the processing system to implement a method according to any embodiment of the first aspect and/or to implement a system according to any embodiment of the second aspect.

The computer program may coordinate a training of the hybrid quantum-classical computation system, and or may implement a hybrid quantum-classical computation system for approximating a given labelling function based on previously obtained trainable parameters.

DETAILED DESCRIPTION OF EMBODIMENTS

The features and numerous advantages of the method and system according to the present invention will best be understood from a detailed description of preferred embodiments with reference to the accompanying drawings, in which:

Fig. 1    schematically illustrates an example of a hybrid quantum-classical computation system;

Fig. 2    schematically illustrates another hybrid quantum-classical computation system;

Fig. 3    illustrates a flowchart of a method for training a hybrid quantum-classical computation system according to an example;

Fig. 4    illustrates steps for constructing a hybrid quantum-classical computation system according to an example;

Fig. 5    illustrates another flowchart for training a hybrid quantum-classical computation system;

Fig. 6A    shows an example of a labeling function with a single input feature to be approximated with a hybrid quantum-classical computation system;

Fig. 6B    shows a schematic example of a hybrid quantum-classical computation system for approximating the labeling function shown in Fig. 6A;

Fig. 7A, 7B    show the contribution ratio of a machine learning model and a variational quantum circuit as a function of the learning rate of the machine learning parameters and the losses as a function of ratio, while the learning rate of the variational parameters is fixed, for an example of training the hybrid quantum-classical computation system of Fig. 6B to predict the labeling function of Fig. 6A;

Fig. 8    illustrates the evolution of the losses during the training of the hybrid quantum-classical computation system of Fig. 6B and its constituents for predicting the labeling function of Fig. 6A according to an example;

Fig. 9A-D    illustrate the labeling function and the optimal predictions of the labeling function of Fig. 6A by the hybrid quantum-classical computation system of Fig. 6B and its constituents according to an example;

Fig. 10A, B    illustrate the evolution of the ratio and the loss as a function of the epochs during training according to an example of training the hybrid quantum-classical computation system of Fig. 6B to predict the labeling function of Fig. 6A;

Fig. 11    shows another schematic example of a hybrid quantum-classical computation system for approximating a labeling function with two input variables;

Fig. 12A-D    illustrates an example labeling function as a contour plot and the optimal predictions of the labeling function by the hybrid quantum-classical computation system and its constituents according to an example;

Fig. 13    illustrates the evolution of the losses as a function of epochs during the training of the hybrid quantum-classical computation system and its constituents according to an example; and

Fig. 14    illustrates a flowchart of a method to select suitable processing hardware for a labeling function according to an example.

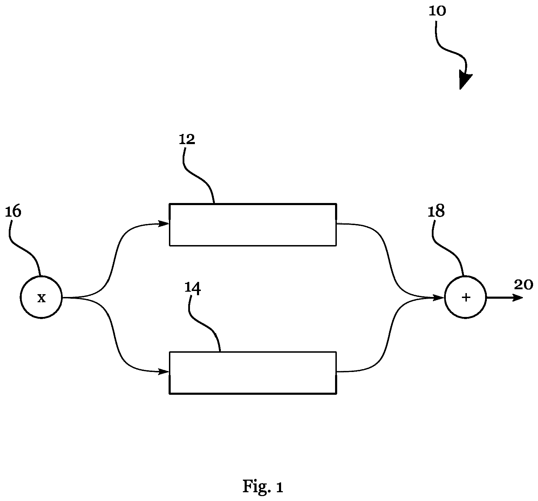

Fig. 1 schematically illustrates an example of a hybrid quantum-classical computation system 10 comprising a variational quantum circuit 12 and a machine learning model 14. The system 10 receives an input feature vector 16 at an input, which may take the form of a single value or a plurality of values encoded in any suitable format. For example, the input feature vector 16 may be a single real value encoded as a bit string in a processing system. The input feature vector 16 is passed to and is processed by the variational quantum circuit 12 and the machine learning model 14 in parallel. The skilled person will however appreciate that it is not necessary to process the input feature vector 16 in the variational quantum circuit 12 and the machine learning model 14 at the same time.

The variational quantum circuit 12 maybe implemented at least partially on a quantum device, wherein the input feature vector 16 or a feature vector derived therefrom is encoded in a quantum state of the quantum device. The quantum state of the quantum device may be manipulated based on a configuration of variational quantum gates, whose action can be parametrized by variational parameters. An output state of the quantum device can be measured (repeatedly) and a first output can be generated based on the measured output state.

The machine learning model 14 can be implemented in a classical processing system, which may comprise a GPU and/or an AI processing device, and may process the input feature vector 16 according to an internal multilayer perceptron (MLP) with layers of artificial neurons processing inputs based on an activation function, which can be parametrized by trainable weights and/or biases for each artificial neuron. A second output of the machine learning model 14 may then be generated based on the activations of the artificial neurons in an output layer of the multilayer perceptron.

After processing, the first output and the second output may be provided to a labeling module 18. The labeling module 18 may generate an output 20 based on the first output and the second output according to combination parameters. The labeling module may be a machine learning model, such as a multilayer perceptron, or may implement a combination function, such as a linear combination of the first output and the second output, in a classical processing system. For example, the first output and the second output may be combined according to the linear combination function

$$f(\overrightarrow{o_1}, \overrightarrow{o_2}) \propto \sum_{i=1}^{n} \alpha_i o_{1i} + \beta_i o_{2i} \tag{1}$$

with $\overrightarrow{o_1}, \overrightarrow{o_2}$ being first and second output vectors of the variational quantum circuit and the machine learning model, respectively, $\alpha_i, \beta_i$ being the combination parameters for the ith element of the output feature vector with n elements, and $o_{1i}$ and $o_{2i}$ being the ith elements of the first and second output vector, respectively. As an example, $\beta_i$ can be $(1 - \alpha_i)$.

The combination parameters, the machine learning parameters, and the variational parameters can be jointly trained, e.g. based on stochastic gradient descent or a variant thereof, such that the output 20 produced by the labeling module 18 can be used as a label approximating a generally unknown labelling function, which maps the input feature vector 16 to an output label.

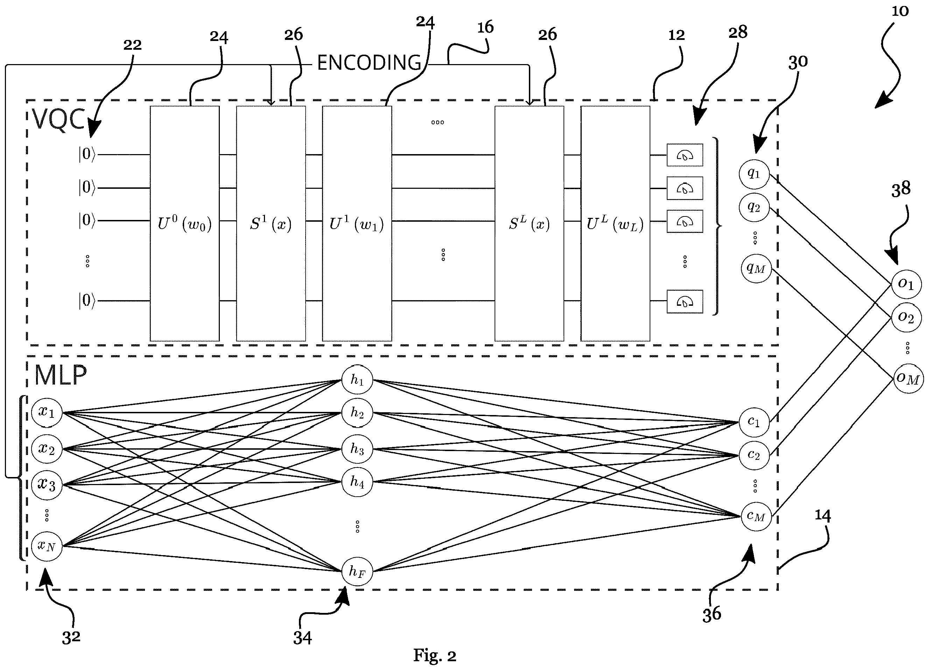

Fig. 2 schematically illustrates another hybrid quantum-classical computation system 10 comprising a variational quantum circuit 12 (VQC) and a machine learning model 14 implemented as a multilayer perceptron (MLP) according to an example. The input data encoded in the input feature vector 16 flows into the machine learning model 14 and the variational quantum circuit 12 in parallel and is then combined and used as the output 20, wherein the combination of the outputs implements a labeling module 18. The combination can be a weighted linear addition with trainable weights, which may determine the contribution of the variational quantum circuit 12 and the machine learning model 14 to the final output 20.

The variational quantum circuit 12 used in the illustrated example is a generalized data re-uploading variational quantum circuit 12, where K qubits 22 are initialized in the state $|0\rangle^{\otimes K}$, and then a series of variational gates 24 (layers), described by the unitaries $U^{0,\cdots,L}(w_{0,\cdots,L})$, and encoding gates 26 (layers), given by unitaries $S^{1,\cdots,L}(x)$, are applied in alternation. The encoding layers S take the input features, $\{x_1,\cdots,x_N\}$, and encode them in a unitary transformation which is then applied to the state of the qubits 22. The variational layers U, are unitaries that encapsulate the variational quantum circuit 12 model parameters as an operator that can be applied to the quantum state of the network and are parametrized by the variational parameters $w_{0,\cdots,L}$, which may each comprise multiple values, i.e. $w_i$ may be a vector. Finally, the quantum state of the qubits 22 is measured by at least one detector 28, such that the quantum information collapses into M classical outputs, which can be mapped to a first output $q_{1,\cdots,M}$ by taking the expectation value of the circuit

$$f(x, \theta) = \langle \psi(x, \boldsymbol{\theta})|M|\psi(\boldsymbol{x}, \boldsymbol{\theta})\rangle, \tag{2}$$

where $|\psi(\boldsymbol{x}, \theta)\rangle$ denotes the state of the quantum circuit prior to the measurement, x is the input feature vector and $\theta$ are the variational parameters.

The number $M$ of classical outputs $q_{1,\cdots,M}$ of the variational quantum circuit 12, and K, the number of qubits 22, does not need to be the same, as it may be sufficient to measure some of the qubits 22 to determine the output label 38.

In parallel, the fully connected MLP also takes in the N features in an input layer 32, whose outputs can be passed to a single layer of hidden neurons 34 of size F, which may be implemented by multiplying the input feature vector 16 by a weight matrix of size NxF, with weights $w_{i,j}^{(k)}$ associated with each artificial neuron $j$ in each layer $k$ acting on the respective inputs i. Then, biases $b_i$ may be applied to these values and the result may be scaled using an activation function, e.g.

$$h_i = \sigma\left(w_{i,j}^{(k)} a_j + b_i\right), \tag{3}$$

where $a_j$ are the activations of the preceding layer, and $\sigma$ may be any suitable activation function, such as ReLU, a logistic, sigmoid or hyperbolic tangent function, or any other non-linear activation function known in the art. The non-linear activation function may provide a measure of non-linearity to an otherwise linear system. The activations $h_i$ of the artificial neurons in the hidden layer of neurons 34 can be further propagated to artificial neurons of the output layer 36, which may have their own weights, biases and/or activation function (which maybe a different activation function), for obtaining M outputs denoted as $\{c_1, \cdots, c_M\}$.

The outputs $\{q_{1,\cdots,M}\}$ of the variational quantum circuit 12 form a first output, which may be combined with a second output formed by the outputs $\{c_1, \ldots, c_M\}$ of the machine learning model 14, e.g. using a two-to-one linear weight layer, to form the outputs, $o_1, \cdots, o_M$ as an output label 38. For example, the first output of the variational quantum circuit 12 and the second output of the machine learning model 14 may be combined according to : $o_1 = s_1^c c_1 + s_1^q q_1$ , and similarly for all the M outputs, where $(\{s^q\}, \{s^c\})$ are trainable combination parameters.

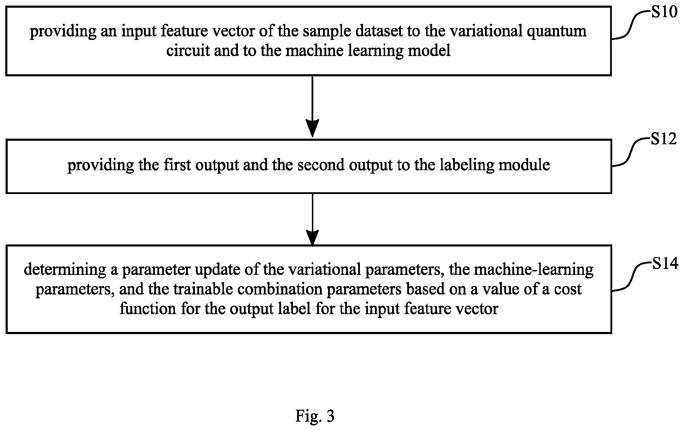

Fig. 3 illustrates a flowchart of a method for training a hybrid quantum-classical computation system 10 according to an example of steps of an iterative training process. The method comprises providing an input feature vector 16 of the sample dataset to the variational quantum circuit 12 and to the machine learning model 14 (S10), and providing the first output and the second output to the labeling module 18 (S12). The method further comprises determining a parameter update of the variational parameters, the machine-learning parameters, and the trainable combination parameters based on a value of a cost function for the output label for the input feature vector 16 (S14).

The hybrid quantum-classical computation system 10 may be trained based on a training dataset of sample data, which may comprise a plurality of sample input feature vectors 16 and corresponding sample output labels 38. Initially, all trainable parameters of the hybrid quantum-classical computation system 10, i.e. the variational parameters, the machine learning parameters of the machine learning model 14 (e.g. the weight and biases of the multilayer perceptron) as well as the combination parameters may be initialized, e.g. as random values. Further, a cost function, i.e. a loss function, such as the mean squared error (MSE) may be selected for quantifying a quality of the output label 38.

Subsequently, the sample input feature vectors 16 may be passed to the hybrid quantum-classical computation system 10 and the gradient of the cost function may be tracked based on the MSE between the output label 38 produced by the hybrid quantum-classical computation system 10 and the sample output label. The gradient may be determined with respect to all the parameters in the network and the average gradient for all the data points may be used to update the trainable parameters, e.g. based on an optimization algorithm, such as adaptive moment estimation algorithm (Adam). The iterative training process may terminate at any point during the training, e.g. if the cost function reaches a certain value, reaches a plateau, or is stuck in a loop about a point in the parameter space. The skilled person will appreciate that it may not be necessary to evaluate the cost function at each iterative step, but it may be sufficient to compute the gradient during the training.

The variational quantum circuit 12 may fit a Fourier series over the sample data of the training dataset

$$f(x) = \sum_{k=-L}^{L} c_k e^{ikx}, \qquad (4)$$

wherein the order L of the Fourier series may be increased by applying the encoding gates 26 multiple times to the qubits 22 as part of the variational quantum circuit 12. At the same time, the machine learning model 14 may fit anharmonic components of the generally unknown labeling function, such that the combined training may efficiently approximate the labeling function.

The composition of the hybrid quantum-classical computation system 10 and the hyper-parameters of the training may be selected based on the labeling function.

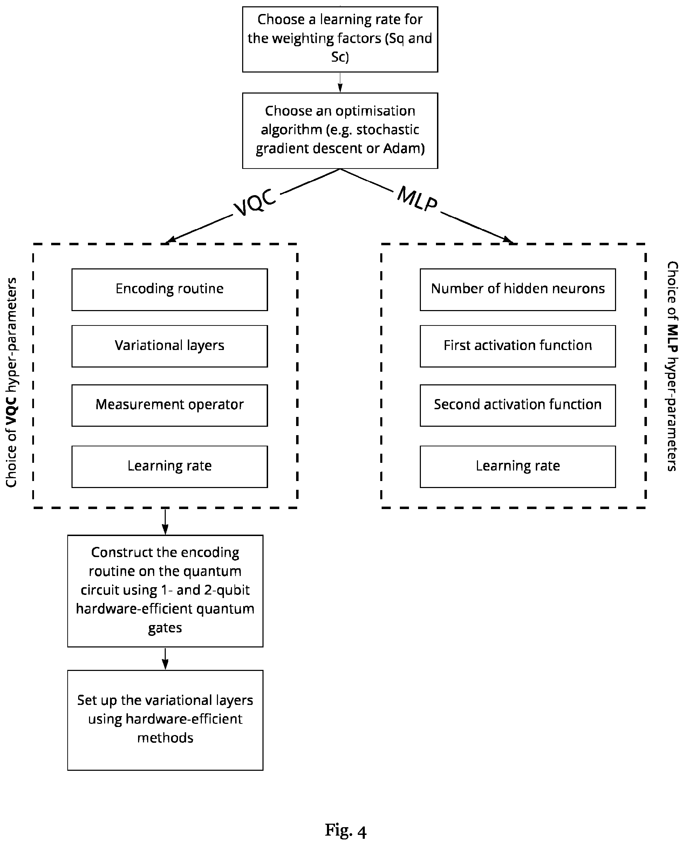

Fig. 4 illustrates steps for constructing a hybrid quantum-classical computation system 10 with parallel variational quantum circuit 12 and machine learning model 14 (parallel hybrid circuit, PHN) according to an example.

The steps comprise selecting learning rates for the weighting factors $s^q$, $s^c$ as combination parameters, which may be different learning rates with respect to the machine learning parameters and/or the variational parameters. Further, the illustrated example steps comprise selecting an optimization algorithm for optimizing the trainable parameters during training.

Further, the steps comprise selecting hyper-parameters for the variational quantum circuit 12 (VQC) and the machine learning model 14, e.g. for a fully connected multilayer perceptron (MLP) with a single hidden layer.

For the variational quantum circuit 12, the steps for selecting suitable hyper-parameters comprise the choice of an encoding routine, such as angle embedding via single qubit rotations as encoding gates 26, which may be repeated or performed multiple times in parallel as part of a data re-uploading, and the design of the arrangement and number of the variational gates 24, e.g. in terms of variational layers. Moreover, a measurement operator is selected, e.g. a projection onto the Z-axis of the qubit state, and the learning rate for the variational parameters can be selected.

For the machine learning model 14, the steps for selecting suitable hyper-parameters may comprise selecting the number of artificial neurons in the at least one hidden layer 34, e.g. based on the training dataset and the specifics of the labeling function. Further, the activation functions may be selected for different layers of a multilayer perceptron, e.g. a sigmoid or logistic activation function for a hidden layer 34 and a ReLU function for the output layer 36, or vice-versa, and the learning rate for the machine learning parameters may be selected.

As part of implementing the variational quantum circuit 12, the initial circuit definition may be passed to a quantum circuit implementation device, which may adapt the variational quantum circuit 12 based on the architecture of the quantum device, such as to optimize the variational quantum circuit 12 for the quantum hardware. For example, when the initial variational quantum circuit 12 specifies a CNOT operation, a hardware implementation may comprise a combination of single qubit and multi qubit state rotations. Moreover, multiple gates may be combined into a different arrangement of quantum gates, such as to implement the variational quantum circuit 12 with hardware efficient quantum gates.

The skilled person will appreciate that the steps are shown for illustration purposes only and maybe performed only partly and in different order, e.g. the learning rates and/or optimization algorithm may be selected as the last step, or prior to the hardware implementation of the variational quantum circuit 12. After the construction of the hybrid quantum-classical computation system 10, the system 10 may be trained to approximate a labeling function.

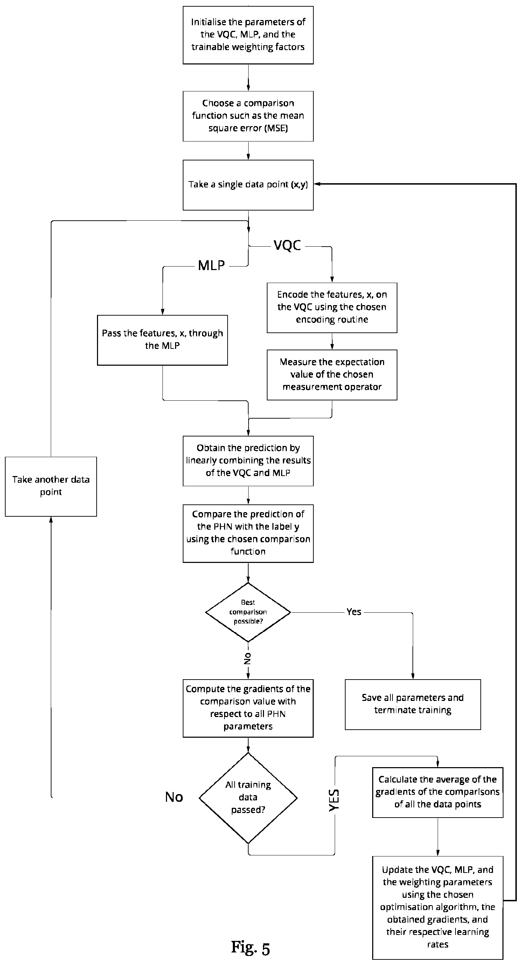

Fig. 5 illustrates a flowchart for training a hybrid quantum-classical computation system 10 with parallel variational quantum circuit 12 and machine learning model 14, implemented as a multilayer perceptron, according to an example.

The flowchart starts with a step of initializing the parameters of the variational quantum circuit 12 (VQC), the machine learning model 14, and the trainable weighting factors forming the combination parameters for linearly combining the outputs of the variational quantum circuit 12 and the machine learning model 14. The subsequent step comprises the choice of a comparison (cost) function for comparing the output label 38 produced by the hybrid quantum-classical computation system 10 with a sample label of a training dataset, such as the mean squared error (MSE).

The training algorithm then iteratively selects a data point, including an input feature vector 16 "x" and a corresponding sample label "y", of the training dataset and passes it in parallel to the variational quantum circuit 12 and to the machine learning model 14, which individually process the data point and return respective outputs.

The machine learning model 14 passes the input feature vector 16 to its input layer 32 and retrieves the output from its output layer 36. The variational quantum circuit 12 encodes the input feature vector 16 using the chosen encoding routine and measures the expectation value of the chosen measurement operator, e.g. the expectation value of the qubits 22 being in "o" or "1" states, based on a Z-axis projection.

A prediction is obtained as an output label 38 by linearly combining the outputs of the variational quantum circuit 12 and the machine learning model 14 according to the trainable weights and the predicted output label 38 is compared to the sample label "y" of the training dataset.

Further, a gradient of the comparison value (cost) may be determined with respect to a portion or all trainable parameters. Subsequently, the next data point may be processed, e.g. until all data points of the training dataset have been passed.

Based on the computed gradients, an average gradient for the processed data points may be determined and may be used to update the trainable parameters based on the chosen optimization algorithm and the selected learning rates, which may terminate one epoch of the training.

The training may subsequently recommence with the first data point, e.g. until it is determined that the parameter update no longer improves the comparison value, until a pre-determined number of epochs, or until a pre-determined comparison value has been reached.

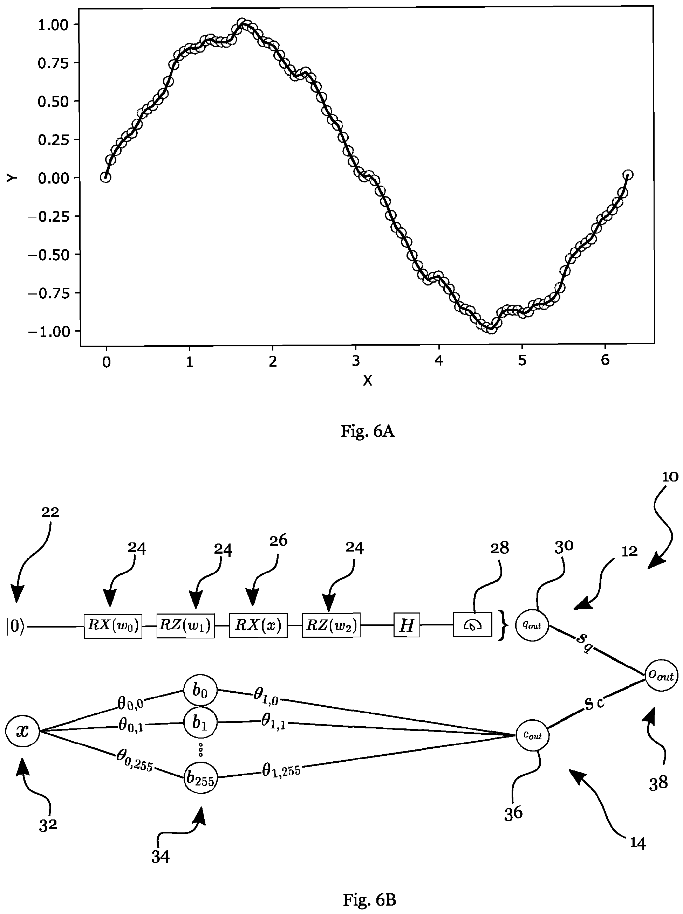

Fig. 6A shows an example of a simple labeling function to be approximated with a hybrid quantum-classical computation system 10. The labeling function is a single-frequency sinusoidal function with a high-frequency perturbation, wherein the example is generated with the function $f(x) = \sin(x) + 0.05 \sin(8x) + 0.03 \sin(16x) + 0.01 \sin(32x)$, and 100 equally-spaced data samples (open circles) were taken from this distribution as a training dataset for training the hybrid quantum-classical computation system 10. The samples are scaled to be between -1 and 1 to function as input features of the hybrid quantum-classical computation system 10, and the function value (Y) is recorded as a sample label for the respective input feature x.

Fig. 6B shows a schematic example of a hybrid quantum-classical computation system 10 for approximating the labeling function shown in Fig. 6A. The hybrid quantum-classical computation system 10 comprises a variational quantum network 12, implemented in a simulated quantum device by the inventors, and a machine learning model 14 implemented in a classical processing system.

The variational quantum circuit 12 comprises a single qubit 22, on which multiple variational gates 24, parametrized by variational parameters $w_0, w_1, w_2$, and an encoding gate 26, encoding the input feature x via angle embedding, act before the quantum state is passed via a Hadamard gate to a detector 28 to generate a first output 30, $q_{out}$.

In parallel, the machine learning model 14 implemented as a fully connected multilayer perceptron (MLP) also takes in the input feature x in an input layer 32, whose output features are passed to a single layer of hidden neurons 34, where the input feature x is multiplied by weights $\theta_{0,0}, \cdots, \theta_{0,255}$, added to biases $b_0, \cdots, b_{255}$, and modified based on an activation function, which is implemented by a ReLU function in the present example. The resulting activations of the hidden neurons 34 are multiplied by weights $\theta_{1,0}, \cdots, \theta_{1,255}$ before being combined to generate the second output $c_{out}$ in the output layer 36.

The outputs $q_{out}$, $c_{out}$ may subsequently be combined based on the combination parameters $s_q$, $s_c$ to obtain the output label 38 indicative of the value of the function (Y) based on the input feature (x).

The individual constituents of the hybrid quantum-classical computation system 10 are subsequently trained for different learning rates for the variational parameters ($w_0$, $w_1$, $w_2$) and the machine learning parameters ($\theta_{0,0}, \cdots, \theta_{0,255}, b_0, \cdots, b_{255}, \theta_{1,0}, \cdots, \theta_{1,255}$,), and the final ratios $s_c/s_q$ and the mean squared error (loss) between the sample label and the output label 38 is recorded.

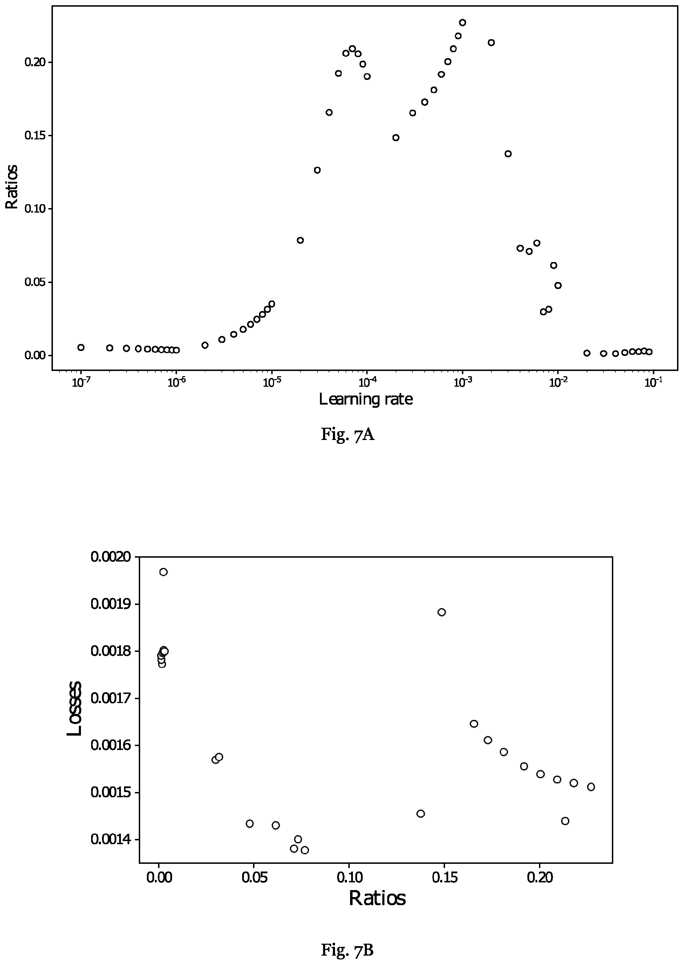

Fig 7A shows the final ratio as a function of the learning rate of the machine learning parameters obtained when training the hybrid quantum-classical computation system 10 of Fig. 6B to predict the function of Fig. 6A, while the learning rate for the variational parameters remains fixed at 0.01. The combination parameters are learned at the same rate, i.e. updated with the same update step size, as the machine learning parameters and form part of the trainable parameters of the hybrid quantum-classical computation system 10. Fig. 7B shows the losses (mean squared error) as a function of the final ratio.

As can be seen from Fig. 7A, the final ratio is affected by the choice of the learning rate for the machine learning parameters and the combination parameters, and is low (smaller than approx. 0.01) both for high (greater than 0.01) and low training rates (smaller than $10^{-5}$). At intermediate values of the learning rate, the ratio is increased (greater than 0.01), such that both the variational quantum circuit 12 and the machine learning model 14 contribute to the final output label 38.

As can be seen in Fig 7B, the lowest losses are obtained for intermediate ratios of approx. 0.07, showing that an optimal combination of the variational quantum circuit 12 and the machine learning model 14 may produce the best approximation for the output label 38, which may be found by a suitable choice of the (relative) learning rates.

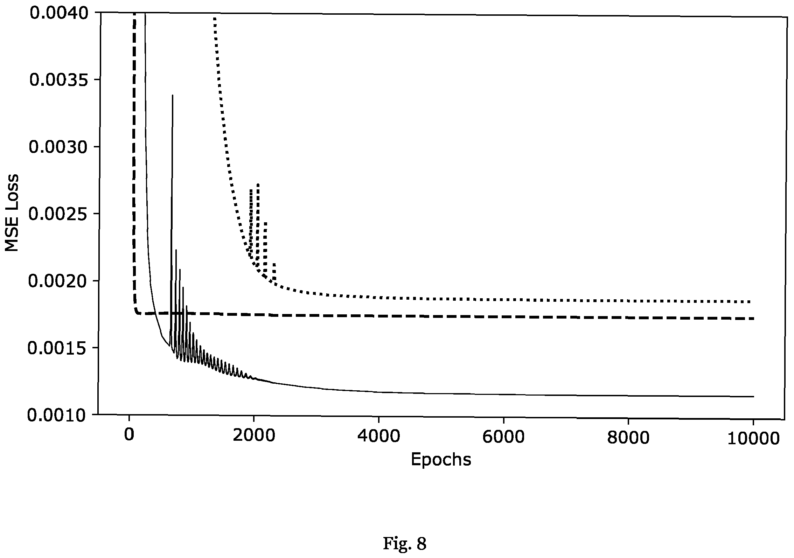

Fig. 8 illustrates the evolution of the losses during training only the variational quantum circuit 12 (dotted line), only the machine learning model 14 (dashed line), and the hybrid quantum-classical computation system 10 (solid line).

As can be seen from the curves, the mean squared error of the variational quantum circuit 12 reaches a plateau after only a few epochs of training (smaller than 500 epochs), whereas the mean squared error of the machine learning model 14 reaches a plateau only after 3000 epochs. The combined variational quantum circuit 12 and machine learning model 14 forming the hybrid quantum-classical computation system 10 reaches lower mean squared error than the individual constituents after around 500 epochs, but continues to improve over time.

As a result, it can be inferred that an optimal training may be obtained by balancing the relative learning rates, such that the fast convergence of the variational quantum circuit 12, when trained individually, does not prevent the detection of a global minimum for the hybrid quantum-classical computation system 10 during the training.

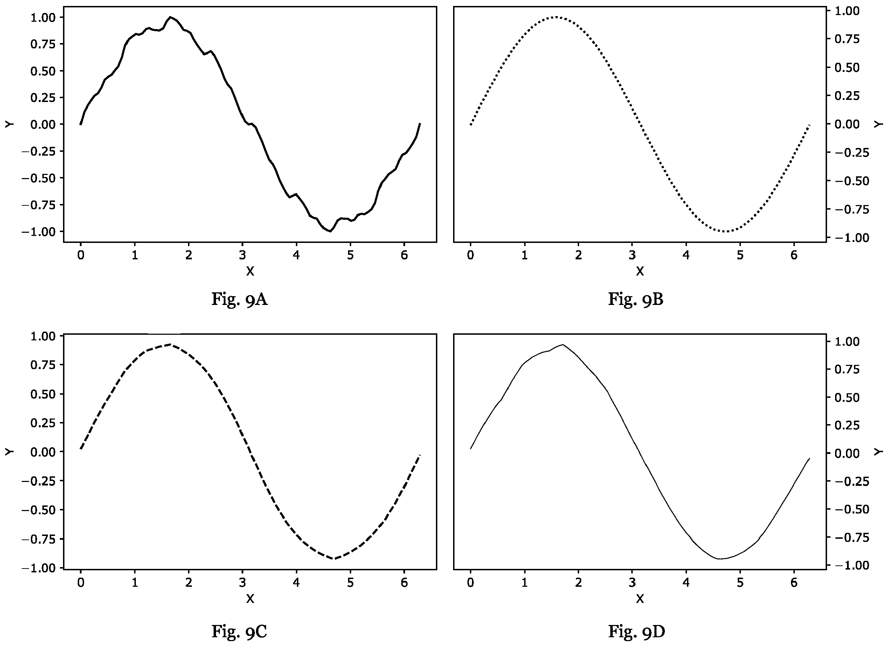

Fig. 9A-9D illustrates the optimal prediction of the labeling function by the hybrid quantum-classical computation system 10 and its constituents, which can be obtained, when training the hybrid quantum-classical computation system 10 of Fig. 6B to predict the function of Fig. 6A. Fig. 9A reproduces the original labeling function to be approximated (bold line). Fig. 9D shows the prediction of the hybrid quantum-classical computation system 10 trained with optimal learning rates. Fig. 9B and 9C show the best approximations obtainable using only the variational quantum circuit 12 (dotted line) and the machine learning model 14 (dashed line), respectively, when they are individually trained to approximate the output label 38 based on the 100 samples in the training dataset.

The output label 38 generated by the variational quantum circuit 12 is a single frequency sine function, which does not consider any high-frequency perturbations. The output label 38 generated by the machine learning model 14 can equally approximate the rough outline of the labeling function, but the highest similarity is obtained using the hybrid quantum-classical computation system 10 combining a variational quantum circuit 12 and the machine learning model 14.

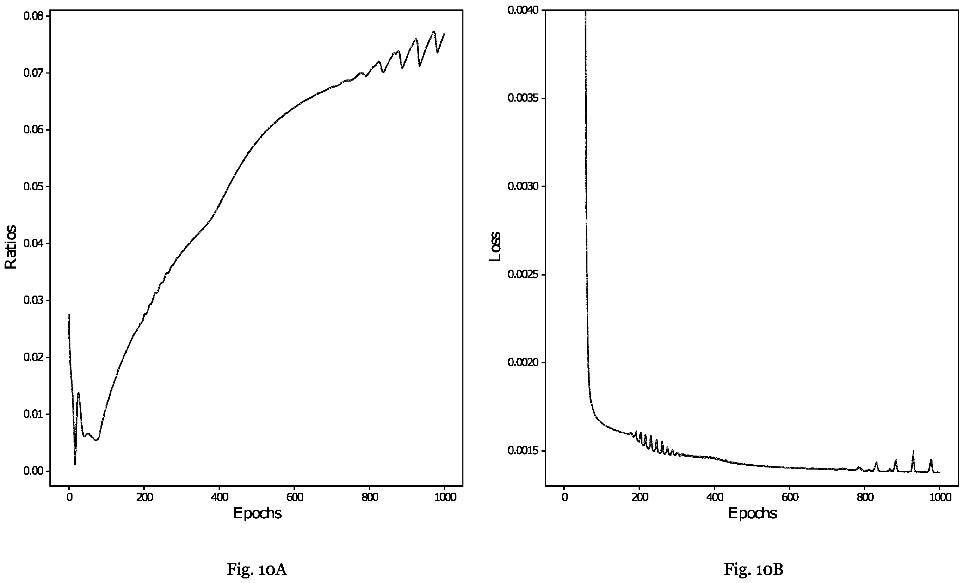

Fig. 10A, 10B illustrate the evolution of the ratio and the loss as a function of the epochs during the training of the hybrid quantum-classical computation system 10 with the optimal learning rate of the machine learning parameters and the combination parameters of 0.007, while the variational parameters are learned with a learning rate of 0.01. The ratio initially is reduced from about 0.03 to about 0.005, while the losses quickly drop. Subsequently, the ratio increases again, while the losses continue to decrease, wherein the losses are minimal at a final ratio of about 0.08.

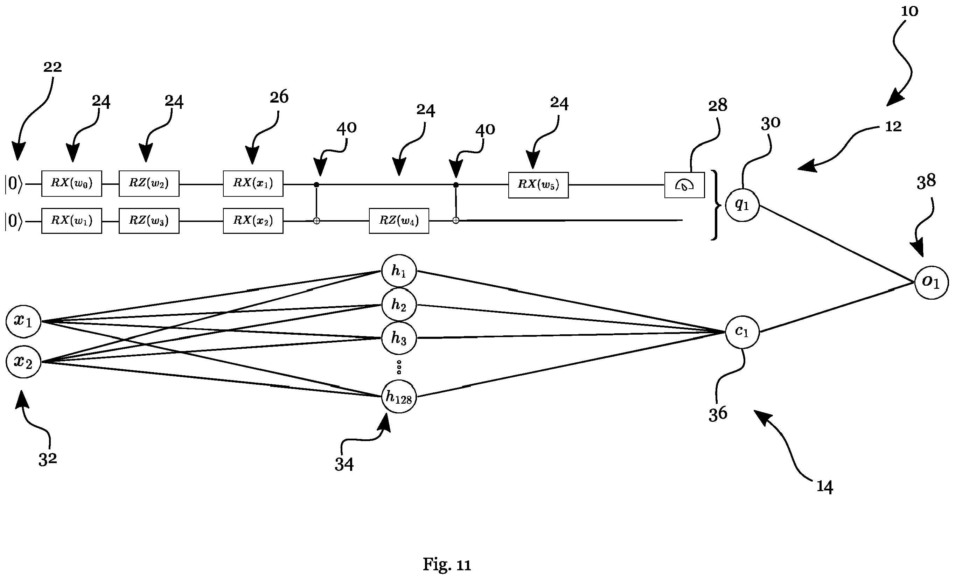

Fig. 11 shows another example of a hybrid quantum-classical computation system 10 for approximating a labeling function which maps two input features $x_1$, $x_2$ of an input feature vector 16 to a single output label 38. The hybrid quantum-classical computation system 10 is similar to the hybrid quantum-classical computation system 10 of Fig. 6B, and corresponding elements are denoted with the same reference signs while their description will not be repeated.

The variational quantum circuit 12 comprises two qubits 22, and a plurality of variational gates 26 and encoding gates 24 act on their respective quantum states. The qubits 22 are entangled by the CNOT operation 40 and finally the state of one of the qubits 22 is measured multiple times to determine the output $q_1$ of the variational quantum circuit 12, which is combined with the output $c_1$ of the fully connected multilayer perceptron (MLP) with a single hidden layer 34 as the machine learning model 14 to produce the output label $o_1$. The activation functions employed in the MLP were selected as ReLU and sigmoid for the first layer and the second layer, respectively.

The hybrid quantum-classical computation system 10 was trained to predict the labeling function $f(x_1, x_2) = \sin(x_1) + \sin(x_2) + 0.8 \sin(x_1 + x_2) + 0.3 \sin(x_1 - x_2) + 0.09 \sin(8x_1 + 4x_2) + 0.05 \sin(16x_1 - 12x_2) + 0.04\sin(12x_1 + 8x_2)$, which comprises a coarse harmonic structure (first 4 terms) as well as high-frequency noise (the last 3 terms), wherein a learning rate of 0.01 was used for the variational parameters and 0.001 for all other trainable parameters. Furthermore, the Adam optimizer was used during training with a learning rate scheduler that multiplied all learning rates by $\gamma = 0.99$ every 10 epochs. A training dataset was constructed from 100 equidistant points from the labeling function.

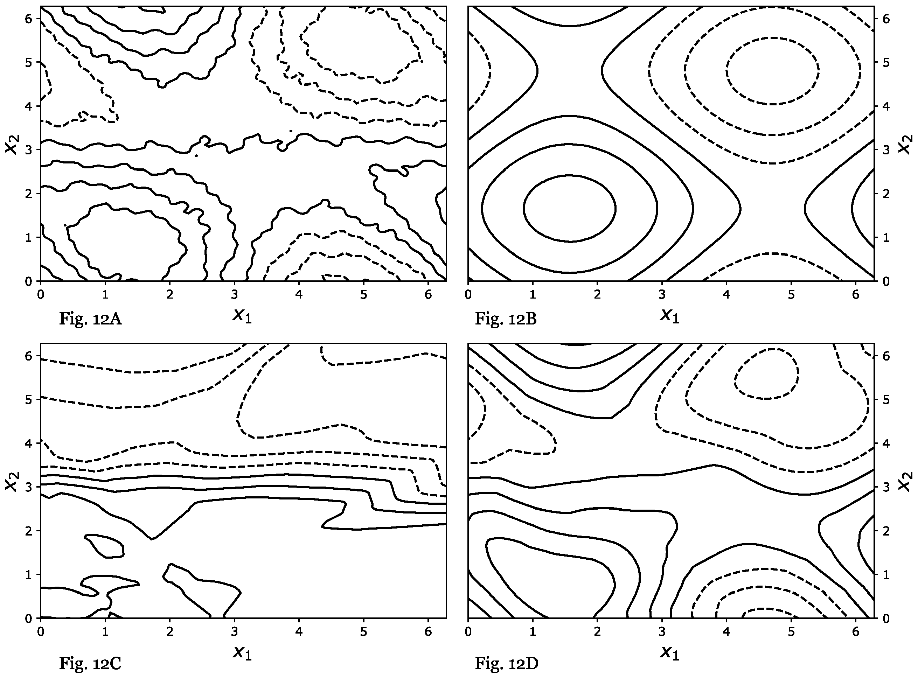

Fig. 12A illustrates the labeling function as a contour plot, Fig. 12B shows the output label 38 as a function of input features $x_1, x_2$ produced by the variational quantum circuit 12 shown in Fig. 11 when trained to approximate the labelling function on its own, Fig. 12C show the result produced by the machine learning model 14 shown in Fig. 11 when trained to approximate the labelling function on its own, and Fig. 12D illustrates the output produced by the hybrid quantum-classical computation system 10 of Fig. 11. The contours represent lines with constant values, the concentric circles indicate increased intensity of the function, and the dotted lines showcase negative values whereas the solid lines show the positive regions.

The prediction of the variational quantum circuit 12 is smooth and convex, in accordance with Eq. (4), whereas the machine learning model 14 approximates the labeling function with jagged shapes, which however poorly agree with the labeling function. Taking advantage of both approximators, the hybrid quantum-classical computation system 10 produces a mix of the harmonic functions with added jagged edges.

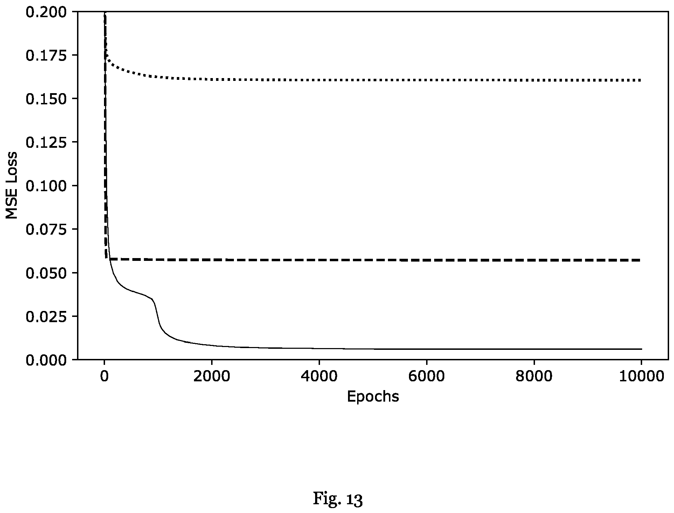

Fig. 13 illustrates the evolution of the losses as a function of epochs during the training of the variational quantum circuit 12 (dotted line) on its own, the machine learning model 14 (dashed line) on its own, and the hybrid quantum-classical computation system 10 (solid line).

As can be seen from the curves, the variational quantum circuit 12 reaches a plateau after only a few epochs of training (smaller than 500 epochs), whereas the losses of the machine learning model 14 reach a plateau only after 3000 epochs, and the losses are significantly higher than for the variational quantum circuit 12 (dotted line) on its own.

The combined variational quantum circuit 12 and machine learning model 14 forming the hybrid quantum-classical computation system 10 quickly reaches lower losses than the individual constituents, but continues to improve over time, which may be understood as the variational quantum circuit 12 quickly approximating the low-frequency components of the labeling function, while the machine learning model 14 subsequently learns the properties of the high-frequency perturbations.

The skilled person will appreciate that the hybrid quantum-classical computation system 10 may perform optimally for certain types of problems, such as when an output label 38 may depend on a large number of input features, e.g. due to the variational quantum circuit 12 providing an exponentially growing space of possible internal states with increasing qubits 22, and when the labeling function underlying the problem is associated with a mix of harmonic and anharmonic features.

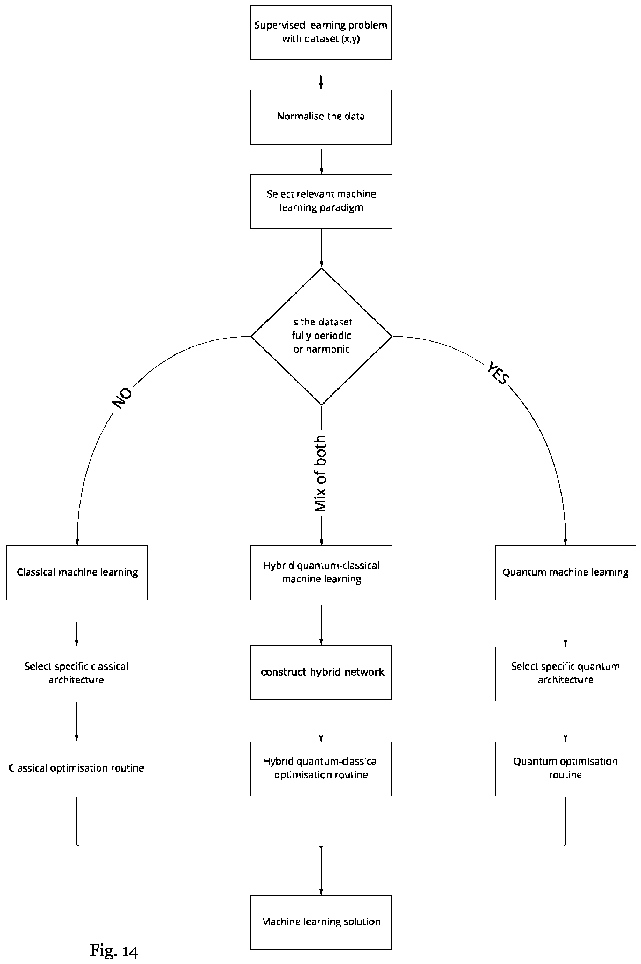

Fig. 14 illustrates a flowchart of a method to select suitable processing hardware given a certain degree of knowledge over the labeling function provided as a dataset of input feature vectors 16, "x", and corresponding output labels 38, "y". The training dataset may be normalized in accordance with an optimal input/output structure for the machine learning model 14 and/or the variational quantum circuit 12, and subsequently a machine learning paradigm may be selected based on the presence of periodic/harmonic features.

If the dataset is fully harmonic, a pure quantum machine learning algorithm may quickly and efficiently converge towards a good labeling function for the dataset. A specific quantum architecture may be selected for the dataset and a quantum optimization routine may be used to approximate the labeling function with a trained variational quantum circuit 12.

If the dataset is mostly or fully anharmonic, classical hardware may be employed for approximating the labeling function, and a suitable architecture and optimization routine may be selected, such that a machine learning model 14 is obtained after the training.

If the labeling function comprises a mix of harmonic and anharmonic/high-frequency features, a hybrid quantum-classical computation system 10 may be constructed, e.g. as in Fig. 4, and may be optimized in a combined training process for approximating the labeling function, such as in the preceding examples.

The skilled person will appreciate that other factors may dominate or factor into the decision process, such as the availability of training samples or the complexity of the input feature vector.

The description of the preferred embodiments and the figures merely serve to illustrate the invention and the beneficial effects associated therewith, but should not be understood to imply any limitation. The scope of the invention is to be determined solely by the appended claims.

LIST OF REFERENCE SIGNS

| | |
|---|---|
| 10 | hybrid quantum-classical computation system |
| 12 | variational quantum circuit |
| 14 | machine learning model |
| 16 | input feature vector |
| 18 | labeling module |
| 20 | variational quantum circuit |
| 22 | qubits |
| 24 | variational gates |
| 26 | encoding gates |
| 28 | detector |
| 30 | first output |
| 32 | input layer |
| 34 | hidden layer |
| 36 | output layer |
| 38 | output label |
| 40 | CNOT operation |

**Claims**

1. A method for training a hybrid quantum-classical computation system for approximating a labeling function for an input feature vector, the system comprising:

a variational quantum circuit comprising a plurality of quantum gates acting on qubits of a qubit register, the plurality of quantum gates comprising variational quantum gates, wherein parametrized actions of the variational quantum gates on the qubits of the qubit register is parametrized according to associated variational parameters, and at least one encoding gate for modifying a state of the qubits of the qubit register according to the input feature vector;
a machine learning model, implemented on a classical processing system, configured to process the input feature vector according to a parametrized transfer function, wherein the parametrized transfer function is parametrized by machine-learning parameters; and
a labeling module, implemented on a classical processing system, configured to receive a first output generated by the variational quantum circuit and a second output generated by the machine learning model and to generate an output label based on a combination of the first output and the second output, wherein the combination is based on a plurality of trainable combination parameters;
the method comprising an iterative process comprising the steps of:

- providing an input feature vector of the sample dataset to the variational quantum circuit and to the machine learning model,

- providing the first output and the second output to the labeling module,
- determining a parameter update of the variational parameters, the machine-learning parameters, and the trainable combination parameters based on a value of a cost function for the output label for the input feature vector.

2. The method of claim 1, wherein a learning rate for updating the variational parameters and the machine-learning parameters is different.

3. The method of claim 2, wherein the method determines an update vector for the variational parameters, the machine-learning parameters, and the trainable combination parameters, and wherein determining the parameter update comprises multiplying the update vector with a learning rate vector, comprising different learning rate factors for the variational parameters and the machine-learning parameters.

4. The method of claim 3, wherein the update vector is a gradient of the variational parameters, the machine-learning parameters, and the trainable combination parameters with respect to the cost function.

5. The method of any one of the preceding claims, wherein determining the parameter update is based on a gradient of the cost function and a learning rate, in particular based on stochastic gradient descent and/or in particular including a momentum coefficient based on a previously determined gradient of the cost function.

6. The method of any one of the preceding claims, wherein determining the parameter update is based on an update function of a moving average over a gradient of the cost function and of a moving average over the squared gradient of the cost function.

7. The method of any one of the preceding claims, wherein the method comprises training the hybrid quantum-classical computation system with different ratios of the learning rate for updating the variational parameters and the machine-learning parameters to determine an optimal ratio of learning rates for updating the variational parameters and the machine-learning parameters with respect to the labeling function.

8. The method of any one of the preceding claims, wherein determining the parameter update comprises determining a vector of derivatives for the variational parameters as part of a parameter update gradient.

9. The method of claim 8, wherein determining the vector of derivatives for the variational parameters comprises applying the parameter shift rule to a subset of or all of the variational gates at each iteration of the iterative process.

10. The method of any one of the preceding claims, wherein the method comprises multiplying the input feature vector with an encoding factor vector to obtain a scaled input feature vector and encoding the input feature vector with the at least one encoding gate based on the scaled input feature vector in the variational quantum circuit, wherein the encoding factor vector is in particular a trainable vector, which is updated as part of the iterative process.

11. The method of any one of the preceding claims, wherein the at least one encoding gate comprises single qubit rotations proportional to a value of the input feature vector.

12. The method of any one of the preceding claims, wherein the at least one encoding gate is applied a number of $k$ times as part of the variational quantum circuit, wherein $k$ is an integer value greater than 2, and wherein the variational quantum circuit is parametrized by at least $2k$ variational parameters.

13. A hybrid quantum-classical computation system for approximating a labeling function for an input feature vector based on a sample dataset of labels and corresponding input feature vectors, the system comprising:

a variational quantum circuit comprising a plurality of quantum gates acting on qubits of a qubit register, the plurality of quantum gates comprising variational quantum gates, wherein parametrized actions of the variational quantum gates on the qubits of the qubit register is parametrized according to an associated variational parameters, and at least one encoding gate for modifying a state of the qubits of the qubit register according to the input feature vector;
a machine learning model configured to process the input feature vector according to a parametrized transfer function, wherein the parametrized transfer function is parametrized by machine-learning parameters;
a labeling module configured to receive a first output generated by the variational quantum circuit and a second output generated by the machine learning model and to generate an output label based on a combination of the first output and the second output according to combination parameters,

wherein the variational parameters, the machine-learning parameters, and the combination parameters are obtained based on a common training algorithm, wherein the variational parameter, the machine-learning parameters, and the combination parameters are jointly updated in an iterative manner to extremize a cost function of the output label.

14. The hybrid quantum-classical computation system of claim 13, wherein the combination parameters determine a ratio of a relative contribution of the first output and the second output to the output label, wherein the ratio is greater than 0.01.

15. A computer program comprising machine readable instructions, which when the computer program is executed by a processing unit cause the processing unit to implement a method according to any one of claims 1-13 and/or to implement a system according to claim 14.

10

12

16

14

18

x

+

20

Fig. 1

Fig. 2

providing an input feature vector of the sample dataset to the variational quantum circuit and to the machine learning model ⟋ S10

providing the first output and the second output to the labeling module ⟋ S12

determining a parameter update of the variational parameters, the machine-learning parameters, and the trainable combination parameters based on a value of a cost function for the output label for the input feature vector ⟋ S14

Fig. 3

Choose a learning rate for the weighting factors (Sq and Sc)

Choose an optimisation algorithm (e.g. stochastic gradient descent or Adam)

VQC

MLP

Choice of **VQC** hyper-parameters

Encoding routine

Variational layers

Measurement operator

Learning rate

Choice of **MLP** hyper-parameters

Number of hidden neurons

First activation function

Second activation function

Learning rate

Construct the encoding routine on the quantum circuit using 1- and 2-qubit hardware-efficient quantum gates

Set up the variational layers using hardware-efficient methods

Fig. 4

Fig. 5

Fig. 6A

Fig. 6B

Fig. 7A

Fig. 7B

Fig. 8

Fig. 9A

Fig. 9B

Fig. 9C

Fig. 9D

Fig. 10A

Fig. 10B

Fig. 11

Fig. 12A

Fig. 12B

Fig. 12C

Fig. 12D

Fig. 13

Fig. 14

Europäisches
Patentamt

European
Patent Office

Office européen
des brevets

# EUROPEAN SEARCH REPORT

Application Number

EP 22 20 7380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANUPAMA RAY ET AL: "Classical ensemble of Quantum-classical ML algorithms for Phishing detection in Ethereum transaction networks", ARXIV.ORG, CORNELL UNIVERSITY LIBRARY, 201 OLIN LIBRARY CORNELL UNIVERSITY ITHACA, NY 14853, 30 October 2022 (2022-10-30), XP091356938, * abstract * * sections 1, 3-5 * * figures 6, 7 * ----- | 1-15 | INV. G06N3/09 G06N10/60 G06N10/40 G06N20/20 G06N3/045 |
| A | SOFIENE JERBI ET AL: "Variational quantum policies for reinforcement learning", ARXIV.ORG, CORNELL UNIVERSITY LIBRARY, 201 OLIN LIBRARY CORNELL UNIVERSITY ITHACA, NY 14853, 9 March 2021 (2021-03-09), XP081908385, * abstract * * section IV * ----- | 1-15 | |
| A | TAK HUR ET AL: "Quantum convolutional neural network for classical data classification", ARXIV.ORG, CORNELL UNIVERSITY LIBRARY, 201 OLIN LIBRARY CORNELL UNIVERSITY ITHACA, NY 14853, 11 February 2022 (2022-02-11), XP091155910, DOI: 10.1007/S42484-021-00061-X * abstract * * section II * ----- | 1-15 | **TECHNICAL FIELDS SEARCHED (IPC)** G06N |

The present search report has been drawn up for all claims

| Place of search | Date of completion of the search | Examiner |
|---|---|---|
| The Hague | 8 March 2023 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                     

& : member of the same patent family, corresponding document

EPO FORM 1503 03.82 (P04C01)

# EP 4 372 622 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CARO et al.** *Generalization in quantum machine learning from few training data*
- **MICHAEL A. NIELSEN.** *Neural networks and deep learning*
- **SCHULD et al.** *Effect of data encoding on the expressive power of variational quantum-machine-learning models*